# EUROPÄISCHE PATENTSCHRIFT

(11) **EP 0 551 936 B1**
(45) Veröffentlichungstag und Bekanntmachung des Hinweises auf die Patenterteilung: **06.12.1995**
(21) Anmeldenummer: 93104611.4
(22) Anmeldetag: 10.09.1991
(51) Int. Cl.: F28G 1/12, G01F 1/712

(54) **Verfahren und Vorrichtung zur Ermittlung der Strömungsgeschwindigkeit des Kühlwassers in einem Wärmetauscher zwecks Ermittlung der Reinigungswirksamkeit von Reinigungskörpern**
Method and apparatus for detecting the flow spud of the cooling water in a heat exchanger for determining the cleaning efficiency of cleaning bodies
Procédé et dispositif pour détecter la vitesse d'écoulement de l'eau de refroidissement dans un échangeur de chaleur pour déterminer l'efficacité de nettoyage de corps de nettoyage

(30) Priorität: 14.09.1990 DE 4029196
(43) Veröffentlichungstag der Anmeldung: 21.07.1993
(62) Teilanmeldung aus: 91115232.0
(73) Patentinhaber: Taprogge Gesellschaft mbH, 58300 Wetter (DE)
(72) Erfinder: Czolkoss, Wolfgang, W-4600 Dortmund 1 (DE)
(74) Vertreter: Patentanwälte Wenzel & Kalkoff

(56) Entgegenhaltungen:
- EP-A- 0 232 719
- DE-A- 3 827 900
- DE-C- 3 316 020
- US-A- 4 762 168

## Beschreibung

Die Erfindung betrifft ein Verfahren und eine Vorrichtung zur Ermittlung der Strömungsgeschwindigkeit des Kühlwassers in einem Wärmetauscher zwecks Ermittlung der Reinigungswirksamkeit von Reinigungskörpern, die zur Reinigung von Rohrbündelwärmetauschern im Kreislauf in den Wassereinlauf eingespeist, durch die einzelnen Rohre gespült, im Wasserauslauf gefangen und nach Durchlaufen einer Schleuse zur Neueinspeisung und/oder Inspektion wieder in den Wassereinlauf eingespeist werden. Bei Kenntnis der Strömungsgesschwindigkeit läßt sich die Reinigungswirksamkeit von Reinigungskörpern im erweiterten Sinne feststellen, nämlich durch Messung des Wärmeübergangs bei Dampfkondensatoren von dem Dampf in das Kühlwasser an einem oder mehreren Kühlwasserrohren des Kondensators.

Die Reinigungswirkung der Reinigungskörper basiert auf der Tatsache, daß sie größer sind als die Innendurchmesser der durchspülten Rohre. Für die Messung der Wirksamkeit der elastischen Reinigungskörper gibt es mehrere Vorschläge. Einer davon kann der Deutschen Patentschrift DE-C-33 16 020 entnommen werden. Die im Kreislauf geführten Reinigungskörper werden dabei nach einem statistischen Zufall durch einen Bypass geführt, in dem sich ein Meßrohr befindet, dessen Auslenkung in Transportrichtung des zu messenden Reinigungskörpers als Reibkraft gemessen wird. Das Meßrohr ist wenige Zentimeter lang, wobei der Reinigungskörper bei der Messung von dem Kühlwasserstrom durch das Meßrohr gespült wird.

Diese Art der Wirksamkeitsmessung der Reinigungswirkung von Reinigungskörpern zur Reinigung von Kondensatoren hat sich im Prinzip bewährt. Allerdings ist der Bauaufwand relativ hoch, so daß derartige Meßvorrichtungen teuer sind. Ein weiterer Nachteil liegt darin, daß wegen der Kürze des Meßrohres nicht immer die für die Reinigung relevante Lage der Kugel innerhalb des Meßrohres zustande kommt, wenn die Reinigungskörper bereits etwas abgenutzt sind und nicht mehr die ideale Kugelform aufweisen, sondern eher einer Tonnenform angenähert sind. Bei dem Eintritt einer Kugel in ein Wärmetauscherrohr ist es nämlich so, daß nach dem Eintritt die Kugel ihre Lage des geringsten Widerstandes einnimmt, also die schlechteste Reinigungswirkung hat. Je nach zufälliger Lage beim Eintritt in das Meßrohr wird entweder eine höhere oder niedrigere Reibkraft bei der Reinigung signalisiert, so daß eine Restunsicherheit bleibt, ob die gemessenen Kugeln tatsächlich die vermutete Reinigungswirkung haben. Insofern ist bei nicht mehr ganz ideal kugelförmigen Reinigungskörpern eine Diskrepanz möglich zwischen gemessener und tatsächlicher Reinigung.

Es ist Aufgabe der Erfindung, ein Verfahren der eingangs genannten Art so zu vorbessern, daß auch diese Restunsicherheit beseitigt wird und der bauliche Aufwand reduziert wird.

Zur Lösung dieser Aufgabe schlägt die Erfindung die Ermittlung der Strömungsgeschwindigkeit vor, um daraus die Reinigungswirkung der Reinigungskörper ermitteln zu können, wobei zur Ermittlung der Strömungsgeschwindigkeit des Kühlwassers dessen Temperaturverlauf in einem Wärmetauscherrohr am Anfang und am Ende eines Wärmetauschers gemessen wird, ausreichend auffallende Temperaturschwankungen des einströmenden Kühlwassers festgestellt werden und eine entsprechende Auswerteinheit zur Wiedererkennung der auffälligen Temperaturschwankungen am Rohraustritt vorgesehen wird. Es ist nämlich möglich, ausreichend auffällige am Rohranfang auftretende Temperaturschwankungen am Rohrende wiederzuerkennen, so daß sie zur Festlegung einer Zeit dienen können, die vom Vorbeiströmen des Kühlwassers am Rohreintritt (1. Meßstelle) bis zum Vorbeiströmen am Rohraustritt (2. Meßstelle) vergeht. Unter Einbeziehung der Rohrlänge kann so die Durchtrittsgeschwindigkeit gemessen werden. Es ist besonders darauf hinzuweisen, daß diese Wiedererkennung gelingt, obwohl das Kühlwasser innerhalb des Rohres erwärmt wird. Es hat sich jedoch überraschend gezeigt, daß trotz dieser vermuteten Störung ausreichend auffällige Temperaturschwankungen beim Einströmen in das Wärmetauscherrohr genau genug erhalten bleiben, um sie am Rohrende wiederzuerkennen, wenn wiederum der Temperaturverlauf gemessen wird.

Die Kenntnis der Strömungsgeschwindigkiet des Kühlwassers im Rohr kann in zweierlei Hinsicht ausgenutzt werden. Zum einen kann bei zusätzlicher Messung des Druckverlustes über das Rohrbündel die Rauhigkeit der Oberfläche der Rohrinnenwandung berechnet werden, weil die Rohrreibungszahl neben den bekannten Abmessungen des Rohres von der Rauhigkeit abhängt. Die Rauhigkeitsbestimmung gibt Hinweise auf mögliche Ablagerungen, insbesondere für chemisch bedingte Verunreinigungen oder auf Korrosionsvorgänge. Des weiteren kann bei einem Kondensator der Wärmeübergang von dem Dampf in das Kühlwasser berechnet werden, wenn die Dampftemperatur bekannt ist. Diese kann sehr leicht durch Stillegen eines benachbarten Kondensatorrohres und Installieren einer Temperaturmeßeinrichtung im Inneren dieses stillgelegten Rohres durchgeführt werden. Diese Art der Messung der Dampftemperatur ist an sich bekannt. Weitere Voraussetzung ist, daß nicht nur das Temperaturprofil zwischen Rohreingang und Rohrausgang an dem entsprechenden Kondensatorrohr wiedererkannt wird, sondern daß auch die tatsächliche Temperatur fehlerfrei erfaßt wird. In Verbindung mit dem aus der Geschwindigkeitsbestimmung abgeleiteten Massenstrom des Kühlwasers und den gemessenen Temperaturen läßt sich der Wärmedurchgangskoeffizient k in üblicher Weise berechnen.

Ausreichend auffällige Temperaturschwankungen bzw. ein ausreichend auffälliges Temperaturprofil ist dann vorhanden, wenn es wiedererkennbar ist. Solche Temperaturverläufe finden sich z. B. in einem zweiten Weg eines mehrwegigen Wärmetauschers. Aufgrund der unterschiedlichen Aufheizung in verschiedenen Bereichen des Rohrbündels ergeben sich an den Rohrenden des ersten Weges unterschiedliche Kühlwassertemperaturen, die sich beim Eintritt in den zweiten Weg noch nicht vollständig vermischt und einnivelliert haben. Vielmehr sind Schwankungen von ca. 2 K innerhalb einer Sekunde feststellbar, was z. B. für eine Wiedererkennung ausreicht, wenn die hochempfindliche, trägheitslose Temperaturmessung gemäß der Erfindung vorgenommen wird und die Auswerteinrichtung beispielsweise durch eine Kreuzkorrelation die Wiedererkennung ermöglicht.

Wenn dasselbe Meßverfahren für die Durchströmungsgeschwindigkeit durch Rohrbündelwärmetauscher an einem ersten Weg oder in einem einwegigen Wärmetauscher vorgenommen werden soll, muß künstlich ein auffälliges Temperaturprofil erzeugt werden, was mit relativ einfachen Mitteln bewerkstelligt werden kann. Es genügt dazu die Einspeisung von Dampf, erwärmtem oder gekühltem Wasser in der Nähe eines mit Thermoelementen am Eintritt und am Austritt versehenen Rohres, wobei insbesondere durch den Wärmetauscher erwärmtes Wasser eingesetzt wird, weil dieses ohne zusätzliche Energieaufwendung zur Verfügung steht. Im übrigen stehen sämtliche Möglichkeiten zur Erzeugung eines warmen oder kalten Teilstromes in dem Kühlwasserstrom zur Verfügung, die technisch ausführbar und praktikabel sind. Es können also die Inhalte von Wärmetauscherrohren in den Kühlwassereinlauf hin ausgeschoben werden, es können Wärmetauscher im Kühlwassereinlauf eingesetzt werden, wobei insbesondere der Rohrboden auf der Kühlwassereinlaufseite als wärmeabgebende Fläche eingesetzt werden kann; der Rohrboden ist wegen der Beaufschlagung auf der anderen Seite durch den zu kondensierenden Dampf bzw. das zu kühlende Medium grundsätzlich wärmer als die Umgebung. Auch kann das Rohr oder können die Rohre zur Eindosierung von warmem oder kaltem Wasser eingesetzt werden, durch die die Eindosierung der Schwammgummikugeln in den Kühlwassereinlauf erfolgt. Es kommt lediglich darauf an, daß eine ausreichend auffällige Temperaturschwankung in der Nähe desjenigen Rohres auftritt, das zur Messung der Durchströmungsgeschwindigkeit hergerichtet ist.

Nachfolgend werden Ausführungsbeispiele der Erfindung, die in der Zeichnung dargestellt sind, näher erläutert; in der Zeichnung zeigen:
Figur 1 eine schematische Übersichtszeichnung eines Dampfkondensators mit einer Anlage gemäß der Erfindung,
Figur 2 eine Querschnittsansicht durch den Bereich eines Kondensatorendes, das erfindungsgemäß mit einer Temperaturmeßeinrichtung versehen ist,
Figur 3 einen Ausschnitt aus einem Meßprotokoll zur Verdeutlichung des Temperaturverlaufs beim Passieren eines Reinigungskörpers einer erfindungsgemäß ausgestatteten Meßstelle und
Figur 4 zwei Meßprotokolle zur Verdeutlichung der Wiedererkennbarkeit eines ausreichend auffälligen Temperaturprofils zwischen Rohreintritt und Rohraustritt bei einem Kühlwasserkondensator.

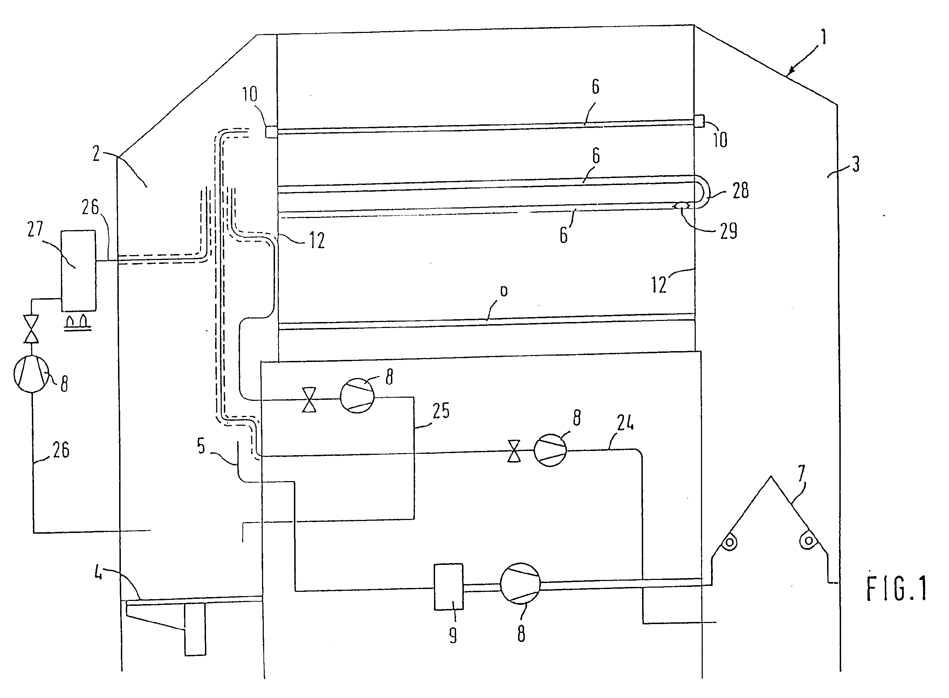

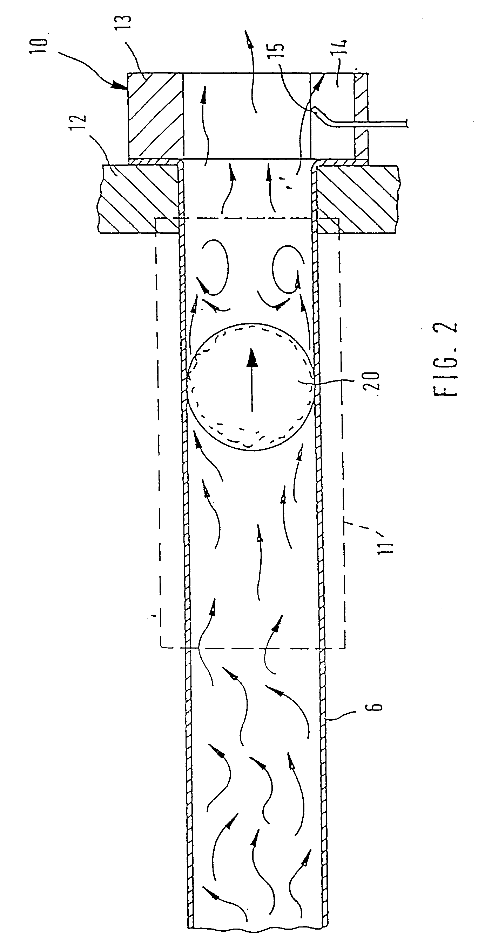

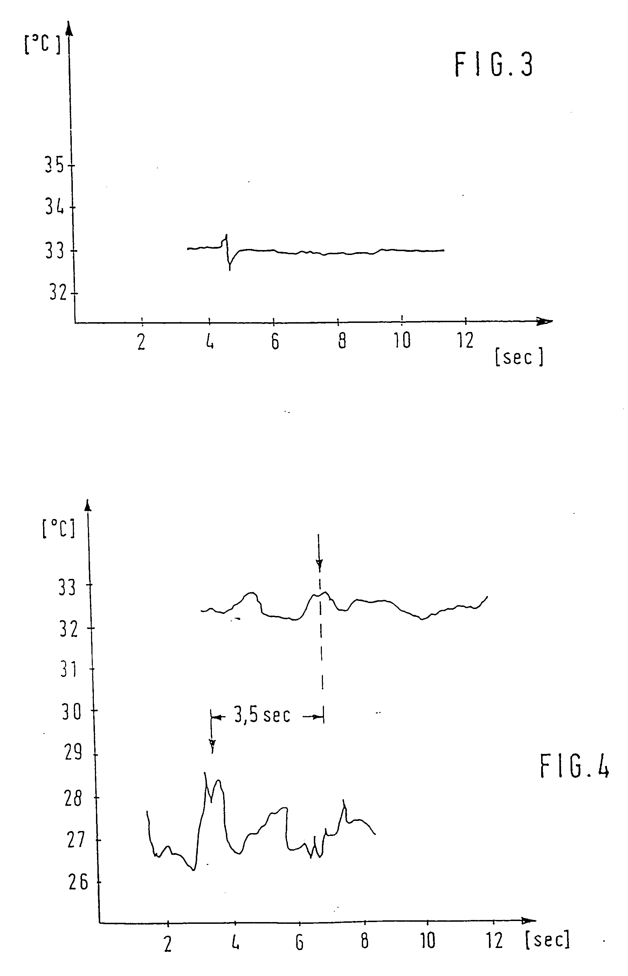

In der Figur 1 ist schematisch ein Dampfkondensator 1 wiedergegeben, bei dem der Dampfweg nicht eingezeichnet ist. In einem Kühlwassereintritt 2 wird Kühlwasser durch Kondensatorrohre 6 gepumpt, das den Kondensator 1 über einen Kühlwasserauslaß 3 verläßt. Auf der Kühlwassereintrittsseite ist ein rückspülbares Filter 4 vorhanden, um grobe Verunreinigungen zurückzuhalten. Am Ausgang des Kühlwasserauslaufs befindet sich eine Siebeinrichtung 7, mit deren Hilfe Reinigungskörper 20 (Figur 2) aufgefangen werden, die im Kreislauf durch die einzelnen Kondensatorrohre 6 zu deren Reinigung hindurchgeführt werden. Dazu ist eine Leitung 5 im Kühlwassereinlauf 2 vorhanden, durch die die Reinigungskörper 20 in das Kühlwasser gelangen. Die Leitung 5 wird aus einer Schleuse 9 gespeist, in der die Reinigungskörper gefangen, aussortiert, ergänzt, inspiziert, gemessen oder in sonstiger Weise behandelt werden können. Eine Pumpe 8 sorgt für die Förderung der Reinigungskörper in die Schleuse 9 hinein bzw. durch die Schleuse 9 hindurch.

Die Erfindung befaßt sich mit der Ermittlung der Reinigungswirkung durch Messen der Strömungsgeschwindigkeit und des Wärmeübergangs vom Dampf auf das Kühlwasser, wodurch quasi indirekt die Reinigungswirksamkeit kontrolliert werden kann, nämlich durch eine Überprüfung des tatsächlichen Reinheitsgrades des gemessenen Kondensatorrohres 6. Außerdem ist durch eine Messung an einzelnen entsprechend ausgewählten Kondensatorrohren eine sehr frühe Erkennung von beginnender Verschmutzung oder Korrosion möglich.

In der Figur 2 ist die Austrittsseite eines Kondensatorrohres 6 wiedergegeben, das mit einem Meßvorsatz 10 versehen ist. Im einzelnen handelt es sich um einen Ring 13, der fluchtend zu dem Kondensatorrohr 6 auf die Außenseite des Rohrbodens 12 des Kondensators 1 aufgesetzt ist. An seiner unteren Seite trägt er einen Schlitz 14, in dem ein Temperaturfühler 15 untergebracht ist.

Der Temperaturfühler 15 muß äußerst schnell reagieren. Es hat sich ein Mantel-Thermoelement bewährt, das einen Außendurchmesser von 0,5 mm aufweist. Es sind zwar noch kleinere Thermoelemente 15 bekannt, es muß allerdings auch eine ausreichende Robustheit vorhanden sein, da gelegentlich auch eine Verunreinigung in das Kondensatorrohr 6 eindringen kann und vor das Thermoelement stoßen kann. Eine solche Beanspruchung sollte das Thermoelement 15 aushalten können.

In der Figur 2 ist mit dem Bezugszeichen 11 ein Kontrollvolumen definiert, das sich gemeinsam mit dem Reinigungskörper 20 durch das Rohr 6 bewegt. Zunächst sei darauf hingewiesen, daß Reinigungskörper 20, die eine von der idealen Kugelform abweichende Form aufweisen, die einer Tonne angenähert ist, nach dem Eintritt in das Kondensatorrohr 6 diejenige Lage einnehmen, in der die Reinigungswirkung am geringsten ist, in der also der geringste Widerstand gegenüber dem Kondensatorrohr 6 vorhanden ist. Diese Lage hat auch die geringsten Reibkräfte zur Folge, also die jeweils schlechteste Reinigungswirkung. Da in besonderer Ausgestaltung der Erfindung ein Kondensatorrohr 6 als Bestandteil der Meßeinrichtung vorgesehen wird und die Messung des Temperaturverlaufs beim Passieren eines Reinigungskörpers 20 am Ende des Kondensatorrohres 6 erfolgt, ist davon auszugehen, daß im Falle einer Messung stets diese Lage mit der geringsten Reibkraft des Reinigungskörpers 20 eingenommen wird. Damit wird gegenüber Meßeinrichtungen, bei denen die Reibkraft direkt gemessen wird, stets der ungünstigste Reinigungsfall für die Messung erfaßt, der für die Reinigungswirksamkeit der Reinigungskörper der einzig relevante Meßwert ist, weil die tatsächliche Reinigung über den größten Abschnitt eines Kondensatorrohres mit der geringsten Lösekraft erfolgt, die sich selbsttätig nach wenigen Zentimetern einstellt.

In der Figur 3 ist ein Meßprotokoll wiedergegeben, das den Temperaturverlauf über der Zeit anzeigt, wie er von dem Thermoelement 15 beim Passieren eines Reinigungskörpers 20 aufgetreten ist. Es ist deutlich ein Anstieg, ein steiler Abfall um annähernd den doppelten Betrag und ein etwas langsamerer erneuter Anstieg auf das alte Temperaturniveau in einer Zeitspanne von weniger als einer halben Sekunde zu erkennen. Der Temperaturverlauf gibt die Verhältnisse innerhalb des Kontrollvolumens 11 wieder, die sich im Verlauf der Durchströmung des Kondensatorrohres 6 gebildet haben und am Ende des Rohres innerhalb des Ringes 13 mit Hilfe des Temperaturfühlers 15 erfaßt werden. Es wurde eingangs schon erläutert, daß aufgrund eines Jet-Effektes vor dem Reinigungskörper 20 eine kräftige Durchwirbelung und damit eine gute Wärmeaufnahme des Kühlwassers aus der warmen Rohrwand vorhanden ist, während hinter dem Reinigungskörper eine eher beruhigte Situation vorhanden ist, wodurch in diesem Teilstrom weniger Wärme von der Rohrwand aufgenommen wird.

Der z. B. als Mantel-Thermoelement ausgeführte Temperaturfühler 15 ist mit einer Auswerteinheit verbunden, in der anhand der in der Figur 3 wiedergegebenen Temperaturausschläge zunächst einmal die Reinigungswirkung der erfaßten Reinigungskörper festgestellt werden kann. Außerdem kann der Umlauf der Reinigungskörper kontrolliert werden, also unter Anwendung der Statistik die Zahl derjenigen Reinigungskörper ermittelt werden, die tatsächlich an der Reinigung beteiligt sind und nicht etwa z.B. in Totwassergebieten verharren. Die ermittelte Zahl ist vergleichbar mit der Zahl der eingegebenen Reinigungskörper. Unter der Voraussetzung, daß gleichmäßig über den Rohrboden verteilt Meßvorsätze 10 an den dort befindlichen Kondensatorrohren 6 angebracht sind, kann die Verteilung der Reinigungskörper innerhalb des Rohrbündels eines Kondensators 1 kontrolliert werden.

Anhand der gemessenen Temperaturschwankungen im Augenblick des Passierens eines Reinigungskörpers am Rohrende kann die Reinigungsintensität, mit der der gesamte Kondensator gereinigt wird, abgeschätzt werden. Diese Reinigungsintensität wird bestimmt von der Reinigungswirkung der in Umlauf befindlichen Reinigungskörper und ihrer Zahl bzw. der Zahl ihrer Durchgänge je Zeiteinheit für die Wärmetauscherrohre. Je nach der Intensität werden die Reinigungsintervalle verlängert oder verkürzt, oder es werden frische Reinigungskörper in den Kreislauf eingebracht, die eine hohe Reinigungswirkung haben.

Alle relevanten Werte können auf einem Monitor angezeigt werden, mit Hilfe eines Druckers ausgedruckt werden oder an eine andere Stelle transferiert werden, beispielsweise in den Kontrollraum einer Kraftwerksanlage. Je nach Automatisierungsgrad kann das Herausfangen verbrauchter Reinigungskörper und das neue Eingeben manuell, halbautomatisch oder vollautomatisch erfolgen, es kommt lediglich darauf an, daß sehr früh eine Verschlechterung der Reinigungswirksamkeit festgestellt wird und Gegenmaßnahmen eingeleitet werden können.

Der in der Figur 2 dargestellte und erläuterte Meßvorsatz 10 kann als identisches Bauteil auch zusätzlich an dem Rohrboden des Kühlwassereinlaufs 2 (Figur 1) angebracht sein, was im übrigen in der Figur 1 an dem obersten, dargestellten Kondensatorrohr 6 angedeutet ist. Damit besteht die Möglichkeit, die Wassereintrittstemperatur und die Wasseraustrittstemperatur des das entsprechende Kondensatorrohr 6 durchströmenden Kühlwassers zu messen. Mit dieser Einrichtung kann die von dem Kühlwasser bei dem Durchgang durch ein Kondensatorrohr aufgenommene Wärmemenge bestimmt werden, wenn der Massenstrom des Kühlwassers bekannt ist, also das Produkt aus Querschnittsfläche, Strömungsgeschwindigkeit und Dichte. Während die temperaturabhängige Dichte bekannt ist und die Querschnittsfläche des Kondensatorrohres konstruktiv festliegt und also ebenso bekannt ist, muß die Strömungsgeschwindigkeit gemessen werden. Das kann mit Hilfe von entsprechenden Meßgeräten geschehen.

Bei dem Dampfkondensator gemäß Fig. 1 wird die Durchströmungsgeschwindigkeit durch Auffinden von Temperaturprofilen ermittelt, indem ein von Kühlwasser durchströmtes Kondensatorrohr 6 mit jeweils einem Meßvorsatz 10 am vorderen und hinteren Ende versehen wird. Es hat sich nämlich gezeigt, daß bei einem ausreichend auffälligen Temperaturprofil beim Eintritt des Kühlwassers in das Kondensatorrohr eine Wiedererkennung dieses Profiles am Rohrende möglich ist, obwohl das Kühlwasser in der Zwischenzeit sowohl Wärme aus dem Dampf aufgenommen hat als auch verwirbelt worden ist. Ein ausreichend auffälliges Temperaturprofil kann in unterschiedlichster Weise erzeugt werden.

In der Figur 4 sind zwei Meßprotokolle wiedergegeben, von denen jeder den Temperaturverlauf am Rohreintritt (untere Linie) und am Rohraustritt (obere Linie) innerhalb eines bestimmten Zeitintervalls zeigen. Das ausreichend auffällige Temperaturprofil beim Eintritt in das Kondensatorrohr 6 stammt aus der Durchströmung eines ersten Kondensatorweges ohne zusätzliche Hilfsmittel. Das aus der ersten Kondensatorstufe austretende Kühlwasser hat also unterschiedliche Zonen, die Temperaturunterschiede von mehreren Kelvin aufweisen. Es wurde nun überraschend gefunden, daß derartige Temperaturprofile trotz starker Verwirbelung und trotz Wärmeaufnahme in dem anschließend durchströmten Kondensatorrohr 6 des zweiten Weges am Ende des Rohres mit ausreichender Sicherheit wiedererkennbar sind. Die in der Figur 4 mit zwei Pfeilen versehenen Bereiche entsprechen sich. Sie liegen 3,5 Sekunden auseinander, und diese 3,5 Sekunden sind die Zeitdauer, die das Kühlwasser zur Durchströmung dieses Kondensatorrohres 6 benötigt. Da die Länge des Kondensatorrohres 6 bekannt ist, kann in dieser Weise die Durchströmungsgeschwindigkeit ermittelt werden.

Die Zuordnung bzw. Wiedererkennung eines ausreichend auffälligen Temperaturprofils wird mit Hilfe einer Kreuzkorrelation vorgenommen. Ein solches Meßverfahren wird in der Zeitschrift "Meßtechnik", Heft 7/71, Seiten 152-157 von den Autoren F. Mesch, H.-H. Daucher und R. Fritsche als Mitteilung aus dem Institut für Meß- und Regeltechnik der Universität (TH) Karlsruhe beschrieben. Auf diese Veröffentlichung wird Bezug genommen.

Die Kenntnis über die Strömungsgeschwindigkeit kann in zweifacher Weise ausgenutzt werden. Es wurde vorangehend schon erläutert, daß bei einer Absolutmessung der Temperatur am Rohranfang und am Rohrende zusätzlich zu der Geschwindigkeitsmessung über das ausreichend auffällige Temperaturprofil die aufgenommene Wärme berechnet werden kann, die das Kühlwasser bei einem Durchgang durch ein Kondensatorrohr 6 aufnimmt. Bei Kenntnis der Dampftemperatur kann dann auch der Wärmeübergang vom Dampf auf das Kühlwasser berechnet werden, so daß der Wärmedurchgangswert k ermittelbar ist, der Aufschluß über den Reinheitsgrad des Kondensatorrohres 6 gibt. Die Dampftemperatur kann sehr leicht durch Stillegen eines benachbarten Kondensatorrohres 6 ermittelt werden, in das dann eine Temperaturmeßeinrichtung eingesteckt wird. Das Verschließen eines einzigen Kondensatorrohres 6 bei beispielsweise zehntausend Rohren innerhalb eines Dampfkondensators ist vom Wirkungsgrad her unbeachtlich. Selbstverständlich kann die Dampftemperatur auch direkt mit Hilfe von Temperaturfühlern oder aus der Messung des Dampfdruckes im Dampfraum des Kondensators 1 ermittelt werden, wenn entsprechende Anordnungen vorhanden sind.

Der Druckverlust zwischen dem Rohreintritt und dem Rohraustritt kann sehr einfach ermittelt werden. Bei Kenntnis des Druckverlustes und der Strömungsgeschwindigkeit kann die Rohrreibungszahl berechnet werden. Diese gibt Hinweise auf die Rauhigkeit der Oberfläche und damit auf das Vorhandensein und die Art von Ablagerungen. Wenn beispielsweise in den Kondensatorrohren 6 Kalkablagerungen entstehen, steigt die Rohrreibungszahl zunächst stark an, was in der beschriebenen Weise sofort feststellbar ist. Bei gleichem Differenzdruck zwischen Einlaß und Auslaß an dem Kondensator 1 sinkt die Durchströmungsgeschwindigkeit deutlich ab, so daß die in dieser Weise angestiegene Reibungszahl der Oberfläche sofort bemerkt wird. Durch Erhöhen der Anzahl der in Umlauf befindlichen Reinigungskörper oder durch Eindosieren von speziellen, möglicherweise mit Korund beschichteten Reinigungskörpern, kann eine sofortige Gegenmaßnahme eingeleitet werden. Es ist also eine erhebliche Transparenz über den Zustand der Kondensatorrohre 6 und die Wirksamkeit der Reinigungskörper vorhanden, obwohl lediglich eine Druckdifferenzmeßeinrichtung und pro zu messendem Kondensatorrohr 6 zwei Thermoelemente im Einsatz sind.

Die Entstehung von Zonen unterschiedlicher Temperatur im Kühlwassereinlauf 2 (Figur 1) des ersten Weges eines Kondensators 1 bzw. bei einwegigen Kondensatoren kann selbstverständlich auch künstlich erzeugt werden durch eine Beimengung erwärmter oder gekühlter Stoffe. Zum Beispiel kann an einer vorgegebenen Stelle, die für ein zu messendes Rohr oder für mehrere ausschlaggebend ist, Dampf eingeblasen werden oder gekühltes bzw. erwärmtes Wasser eindosiert werden, wobei es insbesondere verschiedene Möglichkeiten gibt, erwärmtes Wasser einzusetzen, da dies bereits am Austritt des Wärmetauschers zur Verfügung steht. Es hat sich gezeigt, daß mit derartigen Mitteln ebenfalls ausreichend starke Temperaturschwankungen hervorgerufen werden können, so daß ähnliche Verhältnisse vorherrschen, wie wenn das Kühlwasser bereits den Weg eines Dampfkondensators durchlaufen hätte.

In der Figur 1 sind einige Beispiele skizziert, die dazu benutzt werden können, um ausreichend auffällige Temperaturschwankungen unmittelbar vor dem Eingang des Kondensatorrohres 6 im Kühlwassereinlauf 2 zu erzeugen, das auf beiden Seiten mit einem Meßvorsatz 10 ausgerüstet ist. Die eine Möglichkeit besteht darin, eine Bypass-Leitung 24 vorzusehen, die hinter der Siebeinrichtung 7 den erwärmten Kühlwasserauslauf abgreift und nach Druckerhöhung mit Hilfe einer Pumpe in den Kühlwassereinlauf 1 mündet. Abweichend davon kann mit Hilfe einer Wärmeaustauschleitung 25 Kühlwasser aus dem Kühlwassereinlauf 2 entnommen, mit Hilfe einer Pumpe 8 druckerhöht werden, um über eine vorgegebene Stelle in engem Kontakt mit dem Rohrboden 12 auf dieser Seite des Kondensators 1 geführt und schließlich an geeigneter Stelle in das Kühlwasser ausgelassen zu werden. Im Bereich des engen Kontaktes mit dem Rohrboden 12 nimmt das in der Wärmetauscherleitung 25 geführte Kühlwasser eine höhere Temperatur an, weil wegen der Benetzung des Rohrbodens 12 auf der inneren Seite mit Dampf an dieser Stelle eine höhere Temperatur vorherrscht als im übrigen Kühlwassereinlauf 2. Selbstverständlich kann zusätzlich oder alternativ außerhalb des Wassereinlaufes ein Wärmetauscher vorhanden sein, der mit Dampf betrieben wird oder mit einer sonstigen Prozeßwärme oder Energieform, die ausreichend zur Verfügung steht.

Statt eine Wärmeaustauschleitung 25 in unmittelbarer Nähe des Rohrbodens 12 zu verlegen, kann es ausreichend sein, an dieser Stelle ein Leitblech (nicht dargestellt) anzubringen, das zwischen sich und dem Rohrboden 12 eine Passage bildet, die ggfs. unterstützt durch geschickt geformte Einlässe und einen ebenso geschickt geformten Auslaß eine selbsttätige Durchströmung ohne Pumpunterstützung erfährt. Wenn der Austritt in unmittelbarer Nachbarschaft eines Eintritts eines Kondensatorrohres 6 angeordnet wird, kommt es an dieser Stelle zu der erwünschten Temperaturschwankung. Es sind im Kühlwassereinlauf 2 eines Kondensators 1 in der Regel genügend große Druckunterschiede vorhanden, um eine solche selbsttätige Durchströmung zu bewirken.

Statt eines Wärmetauschers kann auch ein Kessel 27 innerhalb einer Kesselleitung 26 vorgesehen sein, wobei wiederum mit Hilfe einer Pumpe 8 eine Druckerhöhung des Kühlwassers vorgenommen wird, das im Anschluß an das Rückspülfilter 4 aus dem Kühlwassereinlauf 2 entnommen wird. Selbstverständlich kann auch ein Kessel 27 in der Bypass-Leitung 24 oder in der Wärmetauscherleitung 25 vorhanden sein, wenn das erforderlich ist. Es kommt lediglich darauf an, daß der bauliche Aufwand gering gehalten, und die Energieaufwendungen für die Erwärmung bzw. die Förderung von erwärmten oder gekühlten Strömen nicht zu groß wird. Es ist also eine Anordnung zu bevorzugen, bei der aus relativ kleinen Leitungsquerschnitten gezielt wenig erwärmtes Wasser in der Nähe des interessierenden Eintritts des Kondensatorrohres 6 abgegeben wird. Da innerhalb des Kühlwassereinlaufes 2 gegenüber erwärmtem Wasser bereits eine heftige Kühlwirkung vorhanden ist, sollten die warmes Wasser führenden Leitungen isoliert werden, was durch gestrichelte Linien in der Figur 1 angedeutet ist.

Eine weitere Möglichkeit, in den Kühlwassereinlauf 2 erwärmtes Wasser einzudosieren, besteht darin, zwei nebeneinanderliegende Kondensatorrohre mit Hilfe eines Bogens 28 untereinander zu verbinden und an beliebiger Stelle eine Pumpe 29 vorzusehen. Zur Aufrechterhaltung des Stromes von warmem Wasser aus den beiden verbundenen Rohren genügt eine sehr geringe Leistung der Pumpe 29, da nur ein sehr geringes Druckgefälle erzeugt werden muß. Es ist sogar möglich, Druckunterschiede oder hydraulisch-dynamische Effekte am Rohrboden oder innerhalb der Wasserkammern als treibende Kraft auszunutzen.

Die Erfindung in ihrer Gesamtheit gestattet den Aufbau eines modularen Systems zum Betreiben eines Kondensators 1 mit gutem Wirkungsgrad. In der einfachsten Ausführung wird die Wirksamkeit der Reinigungskörper 20 festgestellt, und zwar mit Hilfe eines Meßvorsatzes 10 an mehreren Ausgängen der Kondensatorrohre 6 und einer entsprechenden Auswert- und Anzeigeeinrichtung. Befindet man sich in dem zweiten Weg eines Kondensators, kann durch zusätzliches Montieren der gleichen Meßvorsätze 10 an der Rohreintrittsseite und durch eine Ergänzung der Auswerteinheit um eine Einrichtung zur korrelativen Berechnung der Durchlaufzeit des Kühlwassers durch die Rohre aus dem Vergleich von Temperaturschwankungen am Ein- und Austritt die Kühlwassergeschwindigkeit und der Wärmeübergang zwischen dem Dampf und dem Kühlwasser gemessen werden, wobei allerdings noch eine Möglichkeit vorhanden sein muß, um die Dampftemperatur zu messen. Bei einwegigen Kondensatoren bzw. bei dem ersten Weg eines Kondensators muß die erläuterte Einrichtung zur Erzeugung ausreichend auffälliger Temperaturschwankungen eingerichtet werden.

Schließlich kann durch die zusätzliche Bereitstellung einer Differenzdruckmeßeinrichtung zur Bestimmung des Druckverlustes über das Rohrbündel der Reibungswiderstand der Kondensatorrohre berechnet und damit auf den Zustand der wasserseitigen Rohroberfläche geschlossen werden, womit sich insgesamt die größte Transparenz bei dem Betreiben eines Kondensators 1 ergibt. In jedem Fall werden sehr einfache Vorrichtungen eingesetzt, die einen geringen baulichen Aufwand mit sich bringen. Insbesondere sind die Einbauten in den wasserführenden Kanälen gering und beschränken sich auf kleinste Bauteile und einige Leitungen. Durch eine Vervielfältigung aller Meßpunkte ist eine Kontrolle der Kugelverteilung möglich, außerdem entsteht dadurch ein hochredundantes Überwachungssystem, bei dem der Ausfall der einen oder anderen Meßstelle bis zur nächsten Revision ohne Qualitätseinbuße verkraftet wird.

Die Reinigungswirksamkeit der Reinigungskörper und die Durchlaufgeschwindigkeit können an ein und demselben Rohr gemessen werden. Zeigt ein Temperatursprung den Durchgang eines Reinigungskörpers an, sollte der Meßwert für die Durchströmungsgeschwindigkeit und den Wärmedurchgangskoeffizienten verworfen werden, weil ein ein Kondensatorrohr passierender Reinigungskörper die Durchströmungsgeschwindigkeit absenkt und dadurch die Austrittstemperatur vorübergehend verändert. Liegt jedoch kein Temperatursprung am Rohrende vor, kann jederzeit die Durchströmungsgeschwindigkeitsmessung vorgenommen werden.

## Patentansprüche

1. Verfahren zur Ermittlung der Strömungsgeschwindigkeit des Kühlwassers in einem Wärmetauscher zwecks Ermittlung der Reinigungswirksamkeit von Reinigungskörpern eines Wärmetauschers, die zur Reinigung der Rohre eines Rohrbündelwärmetauschers im Kreislauf in den Wassereinlauf eingespeist, durch die Rohre gespült, im Wasserauslauf gefangen und nach Durchlaufen einer Schleuse zur Neueinspeisung und/oder Inspektion wieder in den Wärmeeinlauf eingespeist werden, wobei
- die Kühlwassertemperatur am Rohraustritt fortlaufend bzw. über
ein vorwählbares Zeitintervall an dem Wärmetauscherrohr (6) gemessen wird,
- die Kühlwassertemperatur am Rohreintritt desselben Rohres (6) ebenfalls fortlaufend bzw. über das Zeitintervall gemessen wird und
- durch eine Korrelationsanalyse eine Zeitdifferenz zwischen einem ausreichend auffälligen Temperaturverlauf an dem Rohranfang und dessen Wiederkehr am Rohrende bestimmt wird, die zur Messung der Durchströmungsgeschwindigkeit unter Einbeziehung der Rohrlänge ausgenutzt wird.

2. Verfahren nach Anspruch 1, dadurch **gekennzeichnet**, daß ausreichend auffällige Temperaturschwankungen im Kühlwassereinlauf durch einen vorgeschalteten Wärmetauscherweg oder durch eine gesonderte Kühlwasser-Temperaturänderung erzeugt werden.

3. Verfahren nach Anspruch 2, dadurch **gekennzeichnet**, daß das Kühlwasser durch Rückführung von in dem Wärmetauscher erwärmtem Wasser in den Bereich des Kühlwassereinlaufs gesondert erwärmt wird.

4. Verfahren nach Anspruch 3, dadurch **gekennzeichnet**, daß zur Rückführung von erwärmtem Wasser die Leitung (5) zur Einspeisung der Reinigungskörper benutzt wird.

5. Verfahren nach Anspruch 3, dadurch **gekennzeichnet,** daß die Strömung in einem Wärmetauscherrohr (6) in der Nähe des zu messenden Wärmetauscherrohres (6) umgekehrt wird.

6. Verfahren nach Anspruch 2, dadurch **gekennzeichnet**, daß das Kühlwasser durch Einblasen von Dampf in den Kühlwassereinlauf erwärmt wird.

7. Verfahren nach Anspruch 2, dadurch **gekennzeichnet**, daß durch Eindosieren von in einem Kessel erwärmtem Wasser das Kühlwasser erwärmt wird.

8. Verfahren nach Anspruch 2, dadurch **gekennzeichnet**, daß das Kühlwasser zur Erwärmung über einen Wärmetauscher geleitet wird.

9. Verfahren nach Anspruch 8, dadurch **gekennzeichnet,** daß als Wärmetauscher der Rohrboden des Einlaufs genutzt wird.

10. Verfahren nach Anspruch 9, dadurch **gekennzeichnet**, daß der Wärmetauscher aufgrund von Druckdifferenzen innerhalb des Kühlwassereinlaufs selbsttätig durchströmt wird.

11. Verfahren nach einem der Ansprüche 1 bis 10, dadurch **gekennzeichnet**, daß zusätzlich zu der Strömungsgeschwindigkeit der Differenzdruck zwischen dem Kühlwassereinlauf und - auslauf gemessen und so die Rohrreibungszahl berechnet wird.

12. Anlage zur Durchführung des Verfahrens nach einem der Ansprüche 1 bis 3, bestehend aus mindestens je einem Temperaturfühler am vorderen und hinteren Ende eines Wärmetauscherrohres und einer Auswerteinheit zur Durchführung einer Kreuzkorrelationsanalyse zur Strömungsgeschwindigkeitsbestimmung, wobei in der Nähe des Rohrbodens auf der Kühlwassereintrittsseite des Wärmetauschers mindestens ein Rohr endet, durch das Dampf oder erwärmtes oder gekühltes Wasser in hinsichtlich Beginn und Dauer vorwählbaren Intervallen austritt.

13. Anlage nach Anspruch 12, dadurch **gekennzeichnet**, daß das Rohr mit der Leitung zur Einspeisung von Reinigungskörpern verbunden ist.

14. Anlage nach Anspruch 12, dadurch **gekennzeichnet**, daß das Rohr mit einem Kessel verbunden ist.

15. Anlage nach Anspruch 12, dadurch **gekennzeichnet**, daß das Rohr ein Kondensatorrohr ist, das fortlaufend in umgekehrter Richtung durchströmt wird.

16. Anlage nach Anspruch 15, dadurch **gekennzeichnet,** daß das Rohr im Bereich des Wärmetauscherauslaufs mit einem weiteren Rohr verbunden ist und der Rohrverbund eine Pumpe enthält oder der Durchfluß durch Druckunterschiede oder hydraulischdynamische Effekte am Rohrboden bewirkt wird.

17. Anlage nach Anspruch 12, dadurch **gekennzeichnet**, daß statt des Rohres auf dem Rohrboden (12) des Kühlwassereinlaufs (2) ein Leitblech angebracht ist, das zusammen mit dem Rohrboden (12) eine Passage bildet, dessen Ausgang in unmittelbarer Nähe eines mit zwei Meßvorsätzen (10) ausgerüsteten Wärmetauscherrohres (6) endet und als Wärmetauscher wirkend selbsttätig von einem Druckgefälle innerhalb des Kühlwassereinlaufs (2) durchströmt wird.

## Claims

1. Method for determining the flow rate of the cooling water in a heat exchanger for the purpose of determining the cleaning efficiency of cleaning bodies of a heat exchanger which for cleaning the tubes of a tube assembly heat exchanger are introduced in circulation into the water inlet, flushed through the tubes, intercepted in the water outflow and after passing through a sluice for re-introduction and/or inspection, are re-introduced into the water inlet, wherein
- the cooling water temperature at the tube outlet on the heat exchanger tube (6) is measured continuously or over a predetermined time interval,
- the cooling water temperature at the tube inlet of the same tube (6) is likewise measured continuously or over the time interval, and
- by means of a correlation analysis a time difference between a sufficiently conspicuous temperature variation at the beginning of the tube and its return at the end of the tube is determined which is utilised for measuring the flow rate while taking account of the length of the tube.

2. Method according to claim 1, characterised in that sufficiently conspicuous temperature fluctuations in the cooling water intake are generated by a heat exchanger path positioned in front or by a separate cooling water temperature change.

3. Method according to claim 2, characterised in that the cooling water is separately heated by the return of water heated in the heat exchanger into the region of the cooling water intake.

4. Method according to claim 3, characterised in that the pipe (5) for introducing the cleaning bodies is used for returning the heated water.

5. Method according to claim 3, characterised in that the flow in a heat exchanger tube (6) is reversed in the vicinity of the heat exchanger tube (6) to be measured.

6. Method according to claim 2, characterised in that the cooling water is heated by injection of steam into the cooling water intake.

7. Method according to claim 2, characterised in that by metering in water heated in a boiler the cooling water is heated.

8. Method according to claim 2, characterised in that the cooling water is conducted over a heat exchanger to heat it.

9. Method according to claim 8, characterised in that the tube plate of the intake is used as heat exchanger.

10. Method according to claim 9, characterised in that flow through the heat exchanger occurs automatically on account of pressure differences within the cooling water intake.

11. Method according to one of the claims 1 to 10, characterised in that in addition to the flow rate, the pressure difference between the cooling water intake and outflow is measured and the coefficient of friction of the tube thus calculated.

12. Installation for carrying out the method according to one of the claims 1 to 3, consisting of at least one temperature sensor each at the front and rear end of a heat exchanger tube and of an evaluating unit for carrying out a cross-correlation analysis for determining the flow rate, wherein in the vicinity of the tube plate on the cooling water intake side of the heat exchanger at least one tube ends through which steam or heated or cooled water emerges in predeterminable intervals as regards start and duration.

13. Installation according to claim 12, characterised in that the tube is connected to the pipe for introducing the cleaning bodies.

14. Installation according to claim 12, characterised in that the tube is connected to a boiler.

15. Installation according to claim 12, characterised in that the tube is a condenser tube in which there is continuous flow in the reverse direction.

16. Installation according to claim 15, characterised in that the tube in the region of the heat exchanger outflow is connected to a further tube and the tube composite contains a pump or the throughflow is effected by pressure differences or by hydraulic-dynamic effects at the tube plate.

17. Installation according to claim 12, characterised in that instead of the tube on the tube plate (12) of the cooling water intake (2), a baffle is attached which together with the tube plate (12) forms a passage whose exit ends in the immediate vicinity of a heat exchanger tube (6) equipped with two measurement attachments (10) and acting as a heat exchanger is flowed through automatically by a pressure gradient within the cooling water intake (2).

## Revendications

1. Procédé pour mesurer la vitesse d'écoulement de l'eau de refroidissement dans un échangeur de chaleur afin de déterminer l'efficacité de nettoyage de corps nettoyants d'un échangeur de chaleur qui sont introduits dans l'entrée d'eau du circuit pour nettoyer les tubes d'un échangeur de chaleur à faisceau tubulaire, poussés à travers les tubes, captés dans la sortie d'eau et, après avoir traversé un sas, sont réintroduits dans l'entrée d'eau pour être remis en circuit et/ou inspectés, la température de l'eau de refroidissement à la sortie du tube étant mesurée en continu ou à un intervalle de temps présélectionné au niveau du tube (6) de l'échangeur de chaleur, la température de l'eau de refroidissement à l'entrée dudit tube (6) étant également mesurée en continu ou selon l'intervalle de temps, et une différence de temps entre une variation de température suffisamment marquante au début du tube et sa réapparition à la fin du tube étant déterminée par une analyse de corrélation et utilisée pour mesurer la vitesse de passage en tenant compte de la longueur du tube.

2. Procédé selon la revendication 1, caractérisé en ce que des fluctuations de température suffisamment marquantes à l'entrée de l'eau de refroidissement sont produites par un parcours amont d'échangeur de chaleur ou par une modification séparée de la température de l'eau de refroidissement.

3. Procédé selon la revendication 2, caractérisé en ce que l'eau de refroidissement est réchauffée séparément en refoulant dans la zone de l'entrée d'eau de refroidissement l'eau réchauffée dans l'échangeur de chaleur.

4. Procédé selon la revendication 3, caractérisé en ce que la conduite (5) d'introduction des corps nettoyants est utilisée pour refouler l'eau réchauffée.

5. Procédé selon la revendication 3, caractérisé en ce que l'écoulement dans un tube (6) de l'échangeur de chaleur est inversé à proximité du tube (6) de l'échangeur de chaleur que l'on veut mesurer.

6. Procédé selon la revendication 2, caractérisé en ce que l'eau de refroidissement est réchauffée en insufflant de la vapeur dans l'entrée d'eau de refroidissement.

7. Procédé selon la revendication 2, caractérisé en ce que l'eau de refroidissement est réchauffée en y introduisant, sous forme dosée, de l'eau réchauffée dans une chaudière.

8. Procédé selon la revendication 2, caractérisé en ce que l'eau de refroidissement passe par un échangeur de chaleur pour être réchauffée.

9. Procédé selon la revendication 8, caractérisé en ce que le fond du tube d'entrée fait fonction d'échangeur de chaleur.

10. Procédé selon la revendication 9, caractérisé en ce que le passage à travers l'échangeur de chaleur s'effectue spontanément en raison des différences de pression existant à l'intérieur de l'entrée d'eau de refroidissement.

11. Procédé selon l'une des revendications 1 à 10, caractérisé en ce que la pression différentielle entre l'entrée et la sortie d'eau de refroidissement est mesurée en plus de la vitesse d'écoulement, ce qui permet de calculer le coefficient de frottement dans les tubes.

12. Installation pour mettre en oeuvre le procédé selon l'une des revendications 1 à 3, comprenant au moins un capteur de température à chacune des extrémités avant et arrière d'un tube d'échangeur de chaleur et une unité de traitement pour réaliser une analyse d'intercorrélation afin de déterminer la vitesse d'écoulement, installation dans laquelle, à proximité du fond du tube, sur le côté d'entrée de l'eau de refroidissement de l'échangeur de chaleur, aboutit au moins un tube, duquel de la vapeur ou de l'eau réchauffée ou refroidie sort à des intervalles dont le début et la durée sont présélectionnés.

13. Installation selon la revendication 12, caractérisée en ce que le tube est relié à la conduite d'introduction des corps nettoyants.

14. Installation selon la revendication 12, caractérisée en ce que le tube est relié à une chaudière.

15. Installation selon la revendication 12, caractérisée en ce que le tube est un tube de condenseur qui est parcouru en permanence en sens inverse.

16. Installation selon la revendication 15, caractérisée en ce que le tube est relié à un autre tube dans la zone de sortie de l'échangeur de chaleur, et la combinaison de tubes comporte une pompe ou la circulation est provoquée par des différences de pression ou par des effets hydrauliques et dynamiques au niveau du fond du tube.

17. Installation selon la revendication 12, caractérisée en ce que, au lieu du tube placé sur le fond (12) du tube de l'entrée (2) d'eau de refroidissement, il est prévu une tôle déflectrice qui, conjointement avec le fond (12) du tube, forme un passage dont la sortie aboutit à proximité immédiate d'un tube d'échangeur de chaleur (6) équipé de deux raccords de mesure et, en faisant fonction d'échangeur de chaleur, est parcourue spontanément par un gradient de pression à l'intérieur de l'entrée (2) d'eau de refroidissement.
